# EUROPEAN PATENT APPLICATION

(11) **EP 1 947 057 A1**
(43) Date of publication of application: **23.07.2008**
(21) Application number: 06810921.4
(22) Date of filing: 29.09.2006
(51) Int. Cl.: C01B 33/107

(54) **PROCESS FOR PRODUCTION OF SILICON TETRAFLUORIDE, AND APPARATUS FOR THE PROCESS**

(30) Priority: 03.10.2005 JP 2005289836
(71) Applicant: TOHOKU ELECTRIC POWER CO., INC., Aoba-ku, Sendai-shi, Miyagi-ken 980 (JP); Stella Chemifa Corporation, Osaka-shi, Osaka (JP)
(72) Inventor: NAGANO, Mitsugu, Sendai-shi, Miyagi 9810952 (JP); MORIYA, Takehiko, Sendai-shi, Miyagi 9810952 (JP); WAKI, Masahide, Izumiotsu-shi, Osaka 5950075 (JP); MIYAMOTO, Kazuhiro, Izumiotsu-shi, Osaka 5900982 (JP)
(74) Representative: Meissner, Bolte & Partner
(86) International application number: PCT/JP2006/319542
(87) International publication number: WO 2007/040185

(57) **Abstract**

Disclosed is a process for production of silicon tetrafluoride which can reduce the cost for the silicon tetrafluoride production and can also reduce the quantities of waste products produced in the process. Also disclosed is an apparatus for use for the process. The method comprises the steps of: (a) a high-silica fluorosilicic acid production step in which a raw material (1) containing silicon dioxide is reacted with a mixed solution containing hydrofluoric acid and hydrofluorosilicic acid to yield an aqueous high-silica fluorosilicic acid solution: (c) a silicon tetrafluoride production step in which the aqueous high-silica fluorosilicic acid solution is reacted with sulfuric acid to yield silicon tetrafluoride; and (d) a sulfuric acid production step in which a sulfuric acid fraction containing hydrogen fluoride which is a by-product in the silicon tetrafluoride production step (c) is subjected to steam stripping to yield sulfuric acid. The process is **characterized in that** the sulfuric acid produced in the step (d) is reused in the step (c).

## Description

### TECHNICAL FIELD

The present invention relates to a process for production of silicon tetrafluoride (SiF₄) used for, for example, a raw material for an optical fiber, for a semiconductor, or for a solar cell, or the like, and an apparatus for the process.

### BACKGROUND ART

The following various kinds of processes have been known as a conventional process for production of silicon tetrafluoride: (i) A process for reacting silicon with fluorine to yield silicon tetrafluoride as shown by the following reaction formula (1); and a process for reacting silicon dioxide with hydrogen fluoride as shown by the following reaction formula (2).

Chemical Formula 1

Si + 2F₂ → SiF₄ (1)

SiO₂ + 4HF → SiF₄+2H₂O (2).

(ii) A process for thermally decomposing hexafluorosilicate to yield silicon tetrafluoride as shown by the following chemical formula (3).

Chemical Formula 2

MSiF₆ → SiF₄ + MF₂ (3).

Wherein M represents a metal element such as barium (Ba).

(iii) A process for production of silicon tetrafluoride by the reaction of fluoride such as fluorospar, silicon dioxide, and sulfuric acid as shown by the following reaction formula (4).

Chemical Formula 3

2CaF₂ + SiO₂ +2H₂SO₄ → SiF₄ + 2CaSO₄ + 2H₂O (4).

(iv) A process for obtaining silicon tetrafluoride also as a by-product in producing phosphoric acid.

It is difficult to inexpensively obtain a large amount of fluorine in the process for production of the reaction formula (1). Thereby, the process is not presented for the mass production of silicon tetrafluoride. As shown by the following chemical formula (5), it is known that water which is a by-product hydrolyzes silicon tetrafluoride in the process for production of the chemical formula (2) to yield hydrofluorosilicic acid and silicon dioxide.

Chemical Formula 4

3SiF₄ + 2H₂O → 2H₂SiF₆ + SiO₂ (5).

Therefore, when producing silicon tetrafluoride by the reaction shown by the chemical formula (2), in order to remove water which is a by-product, a dehydration agent such as sulfuric acid is used. Specific examples include a process for introducing hydrogen fluoride into sulfuric acid in which silicon dioxide is suspended to yield silicon tetrafluoride, and a process (the following patent reference 1) for reacting silicon dioxide with hydrofluoric acid to synthesize hydrofluorosilicic acid and adding concentrated sulfuric acid to yield silicon tetrafluoride as shown by the following formulae (6) and (7).

Chemical Formula 5

SiO₂ + 6HF aq. → H₂SiF₆ aq. (6)

H₂SiF₆ aq. + H₂SO₄ → SiF₄ + 2HF + H₂SO₄ aq. (7)

In the case of these processes, sulfuric acid must be kept at a high concentration in order to suppress the generation of hexafluorodisiloxane as impurities of silicon tetrafluoride and the dissolution of silicon tetrafluoride in sulfuric acid. Since a high concentration sulfuric acid aqueous solution (hereinafter, referred to as waste sulfuric acid) containing hydrogen fluoride is generated in large quantities as waste fluid in producing silicon tetrafluoride in large quantities, the waste water treatment process and the cost cause problems.

Associated moisture can be removed by scrubbing silicon tetrafluoride generated by sulfuric acid used as a raw material in the process of the formula (4). However, an apparatus is intensely corroded by water which is a by-product, and a safe continuation operation is difficult.

Patent Reference 1: Japanese Patent Application Laid-Open No. 2005-119 956

### DISCLOSURE OF THE INVENTION

### PROBLEMS TO BE SOLVED BY THE INVENTION

The present invention has been accomplished in view of the problems. It is an object of the present invention to provide a process for production of silicon tetrafluoride which can reduce the cost for silicon tetrafluoride production and the quantities of waste products, and an apparatus for the process.

### MEANS FOR SOLVING THE PROBLEMS

The present inventors have conducted earnest studies for a process for production of silicon tetrafluoride and an apparatus for the process in order to solve the above-mentioned conventional problems. As a result, the present inventors found that the object can be attained by adopting the following constitution, and accomplished the present invention.

That is, in order to solve the problems, the present invention relates to a process for production of silicon tetrafluoride, the process comprising the steps of:
a high-silica fluorosilicic acid production step in which a raw material containing silicon dioxide is reacted with a mixed solution containing hydrofluoric acid and hydrofluorosilicic acid to yield an aqueous high-silica fluorosilicic acid solution:
   a silicon tetrafluoride production step in which the aqueous high-silica fluorosilicic acid solution is reacted with sulfuric acid to yield silicon tetrafluoride; and
   a sulfuric acid production step in which sulfuric acid fraction containing hydrogen fluoride which is a by-product in the silicon tetrafluoride production step is subjected to steam stripping to yield sulfuric acid,
wherein the sulfuric acid yielded in the sulfuric acid production step is reused in the silicon tetrafluoride production step.

The process produces silicon tetrafluoride using sulfuric acid as a dehydration agent for the aqueous high-silica fluorosilicic acid solution. When the aqueous high-silica fluorosilicic acid solution (H₂Si₂F₁₀) obtained in the high-silica fluorosilicic acid production step is reacted with sulfuric acid to yield silicon tetrafluoride in the silicon tetrafluoride production step of the process, sulfuric acid (waste sulfuric acid) containing hydrogen fluoride is also yielded as a by-product.
This waste sulfuric acid is subjected to steam stripping in the sulfuric acid production step to separate and remove hydrogen fluoride from the waste sulfuric acid to yield sulfuric acid. Furthermore, this sulfuric acid is reused in the silicon tetrafluoride production step. That is, the process can reduce the cost required for sulfuric acid and the quantities of waste products, and can also produce silicon tetrafluoride in large quantities.

It is preferable that the sulfuric acid production step includes a step of dehydrating and concentrating the sulfuric acid yielded until the concentration of the sulfuric acid attains a specified concentration capable of being used in the silicon tetrafluoride production step.

It is preferable that silica sand in which a content of silicon dioxide as the raw material is 80 % by weight or more is used.

It is preferable that a content of of the aqueous high-silica fluorosilicic acid solution yielded in the high-silica fluorosilicic acid production step, contained in a product is 42 % by weight or more.

It is preferable that a concentration of the sulfuric acid used in the silicon tetrafluoride production step is 85 % by weight or more. The concentration of sulfuric acid after silicon tetrafluoride is yielded has a lower limit. However, increase in amount of sulfuric acid used for yielding silicon tetrafluoride can be suppressed by setting the concentration of sulfuric acid to 85 % by weight or more as described above. As a result, increase in apparatus size and energy required for reproducing sulfuric acid can be suppressed to reduce the production cost.

It is preferable that a using temperature of the sulfuric acid used in the silicon tetrafluoride production step is 60 °C or less. Silicon tetrafluoride is yielded by the decomposition reaction of the aqueous high-silica fluorosilicic acid solution in the step. However, hydrogen fluoride and water which are associated to the silicon tetrafluoride can be reduced by setting the using temperature of sulfuric acid to 60 °C or less.

It is preferable that a concentration of sulfuric acid containing hydrogen fluoride yielded in the silicon tetrafluoride production step is held at 80 % by weight or more in being calculated based on only sulfuric acid and water except for hydrogen fluoride. This can suppress the generation of hexafluorodisiloxane as an impurity and can also prevent the redissolution of the generated silicon tetrafluoride into the waste sulfuric acid to yield silicon tetrafluoride in a sufficient amount and in a good state.

It is preferable that a content of hydrogen fluoride contained in sulfuric acid yielded in the sulfuric acid production step is 1 ppm by weight or less.

In order to solve the problems, the present invention also relates to an apparatus for production of silicon tetrafluoride, the apparatus comprising:
a reaction vessel in which a raw material containing silicon dioxide is reacted with a mixed solution containing hydrofluoric acid and hydrofluorosilicic acid to yield an aqueous high-silica fluorosilicic acid solution;
a packed column in which the aqueous high-silica fluorosilicic acid solution is reacted with sulfuric acid to yield silicon tetrafluoride;
a steam stripping column in which sulfuric acid containing hydrogen fluoride which is a by-product in the packed column is subjected to steam stripping to remove hydrogen fluoride to yield sulfuric acid; and
an evaporator in which the sulfuric acid yielded in the steam stripping column is concentrated,
wherein the sulfuric acid concentrated in the evaporator is supplied to the packed column.

In the packed column in the constitution, the aqueous high-silica fluorosilicic acid solution (H₂Si₂F₁₀) yielded in the reaction vessel is reacted with sulfuric acid to yield silicon tetrafluoride. Hydrogen fluoride is separated and removed from the waste sulfuric acid yielded as a by-product of this silicon tetrafluoride in the steam stripping column to yield sulfuric acid. Furthermore, sulfuric acid, which is concentrated in the evaporator, is supplied to the packed column. That is, such constitution can reduce the cost required for sulfuric acid and the quantities of waste products, and can also yield silicon tetrafluoride in large quantities.

It is preferable that the evaporator dehydrates and concentrates the sulfuric acid yielded in the steam stripping column until a concentration of the sulfuric acid attains a specified concentration capable of being used in the packed column.

It is preferable that the evaporator is made of metal or glass lining. Of course, a fluorine resin and a high-grade material such as a corrosion resistance alloy can be used for the evaporator. However, the evaporator is preferably made of metal or glass lining in view of the cost. Since hydrogen fluoride is separated and removed in the steam stripping column, an inexpensive general industrial material such as metal or glass lining can be used as the evaporator for concentrating sulfuric acid without using the high-grade material.

### EFFECT OF THE INVENTION

The present invention exhibits effects to be described below by the means described above.
That is, the present invention uses sulfuric acid as the dehydration agent for the aqueous high-silica fluorosilicic acid solution, removes hydrogen fluoride from conventionally discarded waste sulfuric acid in silicon tetrafluoride production, and circularly uses the obtained sulfuric acid. As a result, the cost required for sulfuric acid and the quantities of waste products can be reduced, and also silicon tetrafluoride can be produced in large quantities.

### BRIEF DESCRIPTION OF THE DRAWINGS

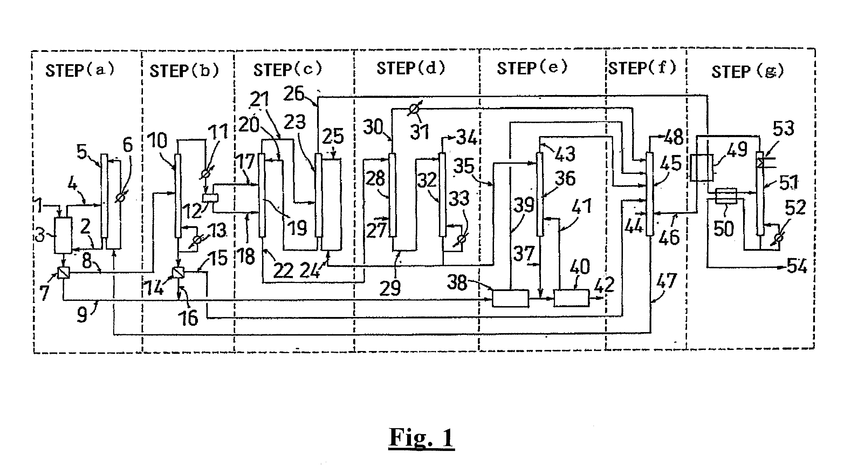

Fig. 1 is a flow diagram for explaining a process and apparatus for production of silicon tetrafluoride according to one embodiment of the present invention.

### DESCRIPTION OF THE SYMBOLS

- 1: = raw material
- 2: = first raw material passage
- 3: = reaction vessel
- 4: = gas passage
- 5: = first absorber
- 6: = cooler
- 7: = solid-liquid separator
- 8: = crude aqueous high-silica fluorosilicic acid solution passage
- 9: = solid impurity passage
- 10: = first distillation column
- 11: = condenser
- 12: = gas-liquid separation vessel
- 13: = first reboiler
- 14: = solid-liquid separator
- 15: = hydrofluorosilicic acid passage
- 16: = solid impurity passage
- 17: = silicon tetrafluoride passage
- 18: = refined aqueous high-silica fluorosilicic acid solution passage
- 19: = gas generating column (packed column)
- 20: = first concentrated sulfuric acid passage
- 21: = silicon tetrafluoride passage
- 22: = waste sulfuric acid passage
- 23: = scrubbing column
- 24: = second concentrated sulfuric acid passage
- 2.5: = concentrated sulfuric acid
- 26: = crude silicon tetrafluoride passage
- 27: = steam
- 28: = steam stripping column
- 29: = sulfuric acid passage
- 30: = hydrofluoric acid passage
- 32: = evaporator
- 33: = reboiler
- 34: = waste water
- 35: = fourth concentrated sulfuric acid passage
- 36: = scrubbing column
- 37: = Oleum
- 38: = drier
- 39: = first vapory passage
- 40: = reactor
- 41: = gas passage
- 42: = sulfate
- 43: = second vapory passage
- 44: = anhydrous fluoric acid
- 45: = second absorber
- 46: = gas passage
- 47: = second raw material passage
- 48: = gas
- 49: = adsorber
- 50: = heat exchanger
- 51: = second distillation column
- 52: = second reboiler
- 53: = condenser
- 54: = refined silicon tetrafluoride

### BEST MODE FOR CARRYING OUT THE INVENTION

An embodiment of the present invention will be described below with reference to Fig. 1. Fig. 1 is a flow diagram for explaining a process and apparatus for production of silicon tetrafluoride according to the embodiment. However, unnecessary portions for explanation are omitted, and some portions enlarged or reduced are illustrated for facilitating the explanation.

A process for production of silicon tetrafluoride according to the embodiment has mainly a high-silica fluorosilicic acid production step (a) which yields an aqueous high-silica fluorosilicic acid solution; a step (b) which refines the aqueous high-silica fluorosilicic acid solution; a silicon tetrafluoride production step (c) which yields silicon tetrafluoride; a sulfuric acid production step (d) which yields sulfuric acid; a step (e) which recovers hydrogen fluoride and silicon tetrafluoride; a step (f) which prepares an acid used for the yield of the aqueous high-silica fluorosilicic acid solution in the step (a); and a step (g) which removes air components from silicon tetrafluoride. Hereinafter, the embodiment will be described in detail in the order of processing steps.

In the high-silica fluorosilicic acid production step (a), a raw material 1 containing silicon dioxide is reacted with a mixed solution (hereinafter, referred to as a raw material acid aqueous solution) containing hydrofluoric acid and hydrofluorosilicic acid in a reaction vessel 3 to yield an aqueous high-silica fluorosilicic acid solution (see the following chemical formula (8)). A first raw material passage 2 for supplying the raw material acid aqueous solution is connected to the reaction vessel 3. The raw material acid aqueous solution is once supplied to a first absorber 5 from a second absorber 45 described later, and is then supplied to the reaction vessel 3 from the first absorber 5.

Chemical Formula 6

SiO₂ +4HF/H₂SiF₆ aq. → H₂Si₂F₁₀ aq. (8).

The reaction of silicon dioxide with hydrogen fluoride, represented by the chemical formula (8), and the reaction of impurities except for silicon dioxide contained in the raw material 1 with hydrogen fluoride are exoergic reactions. The reaction heat raises the reaction liquid to the boiling point. Furthermore, excessive heat evaporates silicon tetrafluoride, hydrogen fluoride and water from the reaction liquid. This results in the reduction of the concentration of high-silica fluorosilicic acid in the reaction liquid.
In order to avoid this reduction of the concentration, the mixed gas, which is supplied to the first absorber 5 via a gas passage 4, is absorbed into the raw material acid aqueous solution circulating within the first absorber to be recovered. The raw material acid aqueous solution which has absorbed the mixed gas can be supplied to the reaction vessel 3 to keep high-silica fluorosilicic acid in the reaction liquid at a high concentration.
The absorption of the mixed gas into the raw material acid aqueous solution yields heat. However, this heat is removed by a cooler 6. Therefore, it is preferable that the heat transfer area of the cooler 6, and the temperature and amount or the like of a refrigerant used are sufficient for removing amount of heat obtained by deducting amount of heat required for heating to the boiling point of reaction liquid from reaction heat. Processes for reacting the raw material 1 with the raw material acid aqueous solution while cooling the reaction vessel 3 from the outside or from the inside are considered.
However, when the temperature of the reaction liquid is low, the reaction may be not in full progress. Alternatively, a corrosion-resistant resin material such as a fluorine resin for a liquid contact part of the reaction vessel 3 must be used. However, since the thermal conductivity of the resin material is generally low and an agitator is not further set in the reaction vessel 3 as described below, the indirect cooling of the reaction liquid is not effective.

A solid-liquid separator 7 for removing fluorides and fluorosilicates as impurities contained in the reaction liquid obtained from the reaction vessel 3 is provided at the down stream of the reaction vessel 3. To the solid-liquid separator 7, a crude aqueous high-silica fluorosilicic acid solution passage 8 which discharges an aqueous high-silica fluorosilicic acid solution and a solid impurity passage 9 which discharges fluorides and fluorosilicates are connected.

Examples of the raw materials 1 include silica sand containing silicon dioxide. There can be more particularly used inexpensive silica sand used for a grinding material for sandblast, mold sand and aggregate for cement mortar, or the like. The content of silicon dioxide contained in the raw material 1 is preferably 80 % by weight or more, and more preferably 95 % by weight or more. The content of silicon dioxide, when being less than 80 % by weight, may increase the amounts of sulfuric acid and oleum consumed in the step (e) and the quantities of discharged waste products to increase the cost.
Coal ash discharged from a thermal power plant contains silicon dioxide of about 50 % by weight to about 70 % by weight. A part of the coal ash is effectively used as a concrete additive, a filler material such as plastic and rubber, artificial zeolite, and a planting soil improved material or the like. However, the most part thereof is buried to dispose. The coal ash is also considered to be used for a Si source of this system as the effective use of coal ash.
However, the use of the coal ash causes a large amount of fluorides and fluorosilicates sludges. This sludge is reacted with concentrated sulfuric acid in the step (e) described later, and an amount of sulfates yielded when the valuable components of silicon tetrafluoride and hydrogen fluoride are recovered may exceed the amount of the coal ash as the raw material. As a result, since the quantities of waste products buried to dispose increases, it is hard to say that the coal ash is effectively used.
When the content of silicon dioxide is 100 % by weight, the waste products do not come out at all, and the steps (b) and (e) become unnecessary. Therefore, the content is the most ideal. However, since the content of about 100 % by weight exists in only an artificial refinement, it is difficult to inexpensively obtain the content of about 100 % by weight in large quantities.
Therefore, natural silica sand capable of being inexpensively obtained and having as many content of silicon dioxide as possible is preferable in view of the object of the present invention for inexpensively yielding silicon tetrafluoride in large quantities. Although the particle diameter of silica sand used is not particularly limited, the particle diameter may be 0.01 mm to 10 mm.

It is preferable that the raw material 1 is reacted with the raw material acid aqueous solution by batch operation due to the change operation of a plurality of reaction vessels 3. This is because a continuous feeder which continuously supplies the raw material 1 to the reaction vessel 3 is not required and silicon tetrafluoride and hydrogen fluoride gas can be prevented from leaking to the outside. After feeding the raw material 1 to the reaction vessel 3 in the case of the batch operation, the solid-liquid reaction can be fully advanced without setting the agitator in the reaction vessel 3 by supplying the raw material acid aqueous solution from the bottom of the reaction vessel 3.
Furthermore, a condition in which silicon dioxide is excessive to hydrogen fluoride is convenient for synthesizing the aqueous high-silica fluorosilicic acid solution. Since the agitator is not used, the wear of the corrosion-resistant resin lining of the reaction vessel or stirring blade can be avoided. As a result, the longer operating life of the apparatus and the reduction in the number of maintenance operations are attained.

The content of the aqueous high-silica fluorosilicic acid solution yielded in the step, contained in the product, is preferably 42 % by weight or more, and more preferably 48 % by weight or more and 54 % by weight or less. When the content is less than 42 % by weight and the high-silica fluorosilicic acid is represented by H₂SiF₆·nSiF₄ (n: 0-1), the value of n approaches 0 from 1.
Therefore, the amount of silicon tetrafluoride yielded in the step (b) decreases. In order to obtain refined silica fluorosilicic acid required for yielding silicon tetrafluoride of a specified amount in the step (c), the amount of distillate fluid in a first distillation column 10 (described later) of the step (b) must be increased, and energy supplied to the first distillation column 10 is increased. The amount of sulfuric acid used in order to obtain silicon tetrafluoride of a specified amount in the step (c) is increased. Therefore, energy required for concentrating sulfuric acid in the step (d) may be increased to increase the production cost.

The raw material acid aqueous solution has a composition containing hydrofluoric acid, hydrofluorosilicic acid and water. Silicon tetrafluoride and fluorides or silicon tetrafluoride and fluorosilicates are yielded by reacting hydrofluoric acid with silicon dioxide and oxides of elements except for silicon, contained in silica sand. Hydrofluorosilicic acid absorbs the yielded silicon tetrafluoride or is reacted with the silicon tetrafluoride to yield an aqueous high-silica fluorosilicic acid solution. The water makes the yielded aqueous high-silica fluorosilicic acid solution exist stably.

As shown in Fig. 1, the step (b) removes and refines impurities from the aqueous high-silica fluorosilicic acid solution containing the impurities (fluorides and fluorosilicates) obtained in the step (a), and yields silicon tetrafluoride and concentrates the aqueous high-silica fluorosilicic acid solution. The aqueous high-silica fluorosilicic acid solution is refined in the first distillation column 10 to separate hydrofluorosilicic acid in which the impurities are concentrated.
A first reboiler 13 is equipped with the first distillation column 10. The hydrofluorosilicic acid in which the impurities are concentrated is separated into hydrofluorosilicic acid and the mixture of fluorides and fluorosilicates by a solid-liquid separator 14. This hydrofluorosilicic acid is supplied to a second absorber 45 described later via a hydrofluorosilicic acid passage 15. The fluorides and the fluorosilicates as impurities are supplied to a drier 38 described later via a solid impurity passage 16.
Alternatively, silicon tetrafluoride, hydrogen fluoride and water which are collected from the top of the first distillation column 10 are condensed and cooled in a condenser 11, and are then supplied to a gas-liquid separation vessel 12. In the gas-liquid separation vessel 12, the aqueous high-silica fluorosilicic acid solution is more concentrated than that of supplied to the first distillation column 10, and the silicon tetrafluoride which could not be absorbed is separated (hereafter, the aqueous high-silica fluorosilicic acid solution in which the impurities have been separated is referred to as a refined aqueous high-silica fluorosilicic acid solution).
Silicon tetrafluoride and the refined aqueous high-silica fluorosilicic acid solution are respectively supplied to a gas generating column 19 described later via the silicon tetrafluoride passage 17 and the refined aqueous high-silica fluorosilicic acid solution passage 18. Silicon tetrafluoride is yielded from the reaction shown by the following chemical formula (9).

Chemical Formula 7

H₂Si₂F₁₀ aq. → SiF₄ + H₂SiF₆ aq. (9).

The amount of the refined aqueous high-silica fluorosilicic acid solution yielded in the step is preferably set so that the water content in the refined aqueous high-silica fluorosilicic acid solution becomes equal to the total amount of water yielded by the reaction of silica sand with hydrogen fluoride and water recovered with hydrogen fluoride of steam supplied in order to remove hydrogen fluoride contained in sulfuric acid in the step (d) described later. Thereby, the water balance in the system can be maintained.

As shown by the following chemical formula (10), in the silicon tetrafluoride production step (c), the refined aqueous high-silica fluorosilicic acid solution is reacted with sulfuric acid in the gas generating column 19 to yield silicon tetrafluoride.

Chemical Formula 8

H₂Si₂F₁₀ aq. + H₂SO₄ → 2SiF₄ + 2HF/H₂SO₄ aq. (10).

Concentrated sulfuric acid is supplied to the gas generating column 19 via a first concentrated sulfuric acid passage 20. As the gas generating column 19, for example, a desorption column can be exemplified. The yielded silicon tetrafluoride is supplied to a gas scrubbing column 23 via a silicon tetrafluoride passage 21. On the other hand, concentrated sulfuric acid used for the reaction absorbs hydrogen fluoride, and is by-producted as waste sulfuric acid. In the waste sulfuric acid, a part of hydrogen fluoride and sulfuric acid reacts to fluorosulfonic acid (HSO₃F), as shown by the following chemical formula (11). The waste sulfuric acid is discharged from a waste sulfuric acid passage 22.

Chemical Formula 9

HF + H₂SO₄ → HSO₃F + H₂O (11).

Silicon tetrafluoride supplied to the gas scrubbing column 23 is dehydrated and scrubbed by concentrated sulfuric acid circulating in the gas scrubbing column 23. The concentrated sulfuric acid is mainly supplied via a second concentrated sulfuric acid passage 24. However, in order to compensate the amount consumed in the step (e), concentrated sulfuric acid 25 is also newly supplied. Silicon tetrafluoride (hereinafter, referred to as crude silicon tetrafluoride) containing air components after being dehydrated and scrubbed is supplied to a second distillation column 51 described later via a crude silicon tetrafluoride passage 26. On the other hand, the concentrated sulfuric acid used for dehydrating and scrubbed is supplied to the gas generating column 19 via the first concentrated sulfuric acid passage 20.

The concentration of sulfuric acid used in the gas generating column 19 and gas scrubbing column 23 of the step is preferably 85 % by weight or more, more preferably 90 % by weight or more, and particularly preferably 95 % by weight or more and 98 % by weight or less. Since the concentration of sulfuric acid of less than 85 % by weight reduces the dehydrating capability of sulfuric acid, the amount of sulfuric acid supplied to the gas generating column 19 must be increased.
This may increase apparatus size and energy required for reproducing sulfuric acid to cause the cost increase. Alternatively, it is preferable that the using temperature of sulfuric acid used in the gas generating column 19 and the gas scrubbing column 23 is 10 °C or more and 60 °C or less. Thereby, the accompaniment of water and hydrogen fluoride to silicon tetrafluoride can be suppressed.
Furthermore, it is preferable that the concentration of sulfuric acid in the waste sulfuric acid is kept at 80 % by weight or more when the concentration is calculated based on only sulfuric acid and water except for hydrogen fluoride. Thereby, the generation of hexafluorodisiloxane as impurities contained in silicon tetrafluoride can be suppressed, and the dissolution of the yielded silicon tetrafluoride in sulfuric acid can be suppressed.

When a facility in which waste sulfuric acid, i.e., sulfuric acid containing hydrogen fluoride can be used, for example, a hydrogen fluoride producing apparatus or a phosphoric acid producing apparatus or the like abuts, the waste sulfuric acid can be consumed by the facility. However, when there is no such consumption facility, or when the amount of waste sulfuric acid discharged from the silicon tetrafluoride producing facility exceeds the amount of consumption by much in the consumption facility, the waste sulfuric acid should be reused in a silicon tetrafluoride producing facility without being condemned in view of the cost phase and the environmental aspect.
It is preferable that the content of hydrogen fluoride contained in a sulfuric acid aqueous solution after subjecting the waste sulfuric acid to steam stripping to remove hydrogen fluoride is 1 ppm by weight or less. Thereby, an inexpensive general industrial material such as metal or glass lining can be used for an evaporator 32 or the like which concentrates sulfuric acid. Alternatively, high purity silicon dioxide is added into a steam stripping column itself, vessel or the like provided in the upstream of the steam stripping column.
Silicon dioxide can be reacted with hydrogen fluoride contained in the waste sulfuric acid to yield silicon tetrafluoride to reduce the load in steam stripping. Alternatively, high purity silicon dioxide may be added into the evaporator 32. This can suppress corrosion of the evaporator 32, and can also reduce a corrosion of the apparatus when the concentration of hydrofluoric acid contained in the sulfuric acid from the water vapor distillation column is more than 1 ppm by weight depending on operating conditions.

The sulfuric acid production step (d) yields sulfuric acid for being reused in the silicon tetrafluoride production step. This step blows steam 27 into the waste sulfuric acid supplied from the waste sulfuric acid passage 22 in a steam stripping column 28. Thereby, fluorosulfonic acid partially contained in the waste sulfuric acid is hydrolyzed into hydrogen fluoride and sulfuric acid, and the partial pressure of hydrogen fluoride in the steam stripping column is reduced to efficiently remove the hydrogen fluoride.
Furthermore, when vapor from the top of the steam stripping column is condensed, hydrofluoric acid is yielded. Thereby, hydrogen fluoride is easily recovered. Steam 27 is used since hydrogen fluoride is hardly removed sufficiently from the waste sulfuric acid by only heating the waste sulfuric acid, by heating while blowing gas such as nitrogen and oxygen instead of steam, or by heating after adding water to waste sulfuric acid.

It is preferable that the amount of supply of steam 27 is set as the total of the amount required for diluting the waste sulfuric acid until the waste sulfuric acid has a sulfuric acid concentration becoming a boiling point in the operating temperature of the steam stripping column and amount of moisture required for preparing the composition of the raw material acid aqueous solution used in the step (a). Thereby, the water balance in the system can be maintained.

Separated hydrogen fluoride is supplied as hydrofluoric acid to a second absorber 45 described later via a hydrofluoric acid passage 30. On the other hand, the yielded sulfuric acid is supplied to the evaporator 32 via a sulfuric acid passage 29, and is concentrated in the evaporator 32. Waste water 34 yielded by concentration is discharged from the evaporator 32, and is then discarded. A reboiler 33 is provided in the evaporator 32.
The yielded concentrated sulfuric acid is supplied to the gas scrubbing column 23 in the step (c) via the second concentrated sulfuric acid passage 24, and is used for scrubbing silicon tetrafluoride. The concentrated sulfuric acid is then supplied to the gas generating column 19 via the first concentrated sulfuric acid passage 20, and is reused for generating silicon tetrafluoride. Alternatively, the concentrated sulfuric acid is supplied to a scrubbing column 36 in the next step (e) via a fourth concentrated sulfuric acid passage 35.

An inexpensive general industrial material such as metal or glass lining can be used for the evaporator 32 of the present invention. This is because the corrosion of the evaporator 32 can be suppressed since hydrogen fluoride is not contained in sulfuric acid supplied from the sulfuric acid passage 29.

The present invention removes fluorides and fluorosilicates as impurities in the step (b) so that the impurities are not contained in the aqueous high-silica fluorosilicic acid solution used in the step (c). Therefore, impurities can prevent from being carried over into the waste sulfuric acid yielded in the step (c). As a result, when hydrogen fluoride and moisture are removed from the waste sulfuric acid in the step (d), removal of hydrogen fluoride is facilitated. Furthermore, the impurities can be prevented from precipitating as solid content during the concentration of sulfuric acid to enable a stabilized continuous operation.

The step (e) recovers hydrogen fluoride and silicon tetrafluoride. Fluorides and fluorosilicates which comprise an element except for silicon discharged in the step (a), and fluorides and fluorosilicates discharged in the step (b) are dried in the drier 38. Hydrogen fluoride, silicon tetrafluoride and water which are yielded by this drying are supplied to the second absorber 45 in the next step (f) via a first vapory passage 39.
Dry Solid is supplied to the reactor 40, and is reacted with concentrated sulfuric acid whose concentration is adjusted by adding oleum 37 to the sulfuric acid supplied from the scrubbing column 36. As the reactors 40, a rotary kiln can be exemplified. The oleum 37 is added in order to have the concentration of the sulfuric acid discharged from the absorber 36 being 98 % by weight or more. Thereby, hydrogen fluoride, silicon tetrafluoride, and sulfates 42 are yielded (see the following chemical formulae (12) and (13)).
Hydrogen fluoride and silicon tetrafluoride are supplied to the scrubbing column 36 via a gas passage 41. Hydrogen fluoride and the silicon tetrafluoride are dehydrated and scrubbed by concentrated sulfuric acid in the scrubbing column 36. Hydrogen fluoride and silicon tetrafluoride after being dehydrated and scrubbed are supplied to the second absorber 45 in the next step (f) via a second vapory passage 43.

Chemical Formula 10

MF₂ + H₂SO₄ → MSO₄ + 2HF (12)

MSiF₆ + H₂SO₄ → SiF₄ + 2HF + MSO₄ (13).

Wherein, M represents a metal element such as calcium (Ca) and magnesium (Mg).

The step (f) prepares an acid used for production of the aqueous high-silica fluorosilicic acid solution used in the step (a). That is, a mixed solution (raw material acid aqueous solution) of hydrofluoric acid and hydrofluorosilicic acid is yielded by absorbing hydrofluoric acid discharged in the step (d), hydrogen fluoride, silicon tetrafluoride and water discharged in the step (e), and silicon tetrafluoride discharged in the step (g), and anhydrous fluoric acid 44 into hydrofluorosilicic acid discharged in the step (b).
Gas 48 such as air components associated to liquid, vapor and gas recovered by the steps is discarded. Hydrofluorosilicic acid discharged in the step (b) is supplied from the hydrofluorosilicic acid passage 15. Hydrofluoric acid discharged in the step (d) is supplied from the hydrofluoric acid passage 30. Hydrogen fluoride, silicon tetrafluoride and water which are discharged in the step (e) are supplied from the first vapory passage 39. Silicon tetrafluoride discharged in the step (g) is supplied from a gas passage 46. A raw material acid aqueous solution yielded in the step is supplied to the step (a) via a second raw material passage 47.

The step (g) removes air components from crude silicon tetrafluoride. Crude silicon tetrafluoride yielded in the step (c) is supplied to an adsorber 49 via the crude silicon tetrafluoride passage 26. The adsorber 49 is filled with molecular sheave, zeolite, activated carbon or activated alumina or the like, and removes high boiling point components such as carbon dioxide in silicon tetrafluoride. Silicon tetrafluoride in which the high boiling point components are removed is supplied to a heat exchanger 50.
The crude silicon tetrafluoride cooled and liquefied by the heat exchanger 50. And then, air components are removed from crude silicon tetrafluoride by distillation. The removed air components are supplied to the adsorber 49 via the gas passage 46. The air components eliminate high boiling point components such as carbon dioxide from an adsorbent in the adsorber 49, and are supplied to the second adsorber 45 in the step (f) with the eliminated high boiling point components. Silicon tetrafluoride from which the air components are removed is discharged from the bottom of the second distillation column 51, and heated and vaporized via the heat exchanger 50. Silicon tetrafluoride is then discharged as refined silicon tetrafluoride 54.

Silicon tetrafluoride obtained by the process can be used, for example, for production of a silicon solar cell, for production of SiOF (fluorine-doped silicon oxide film) as a low-k material in a semiconductor device, and as gas for an optical fiber.

### Examples

Hereinafter, suitable examples of the present invention will be illustratively described in detail. However, materials and blending amounts or the like which are described in this example do not mean that the range of the present invention is limited to only the materials and blending amounts as long as there is particularly no limited description., and should be a mere description exemplary.

### Example 1

This example was performed using an apparatus for production of silicon tetrafluoride shown in Fig. 1. First, 454.5 g of silica sand containing silicon dioxide of 95.3 % by weight was reacted with 23.34.1 g of a raw material acid aqueous solution containing hydrogen fluoride of 35.1 % by weight and hydrofluorosilicic acid of 22.5 % by weight in a reaction vessel 3 of the step (a) shown in Fig. 1.
The obtained reaction liquid was supplied to a solid-liquid separator 7 to remove solids (fluorides and fluorosilicates). This operation was performed in four batches, and reaction liquids of all the batches were mixed to obtain 10684.4 g of an aqueous high-silica fluorosilicic acid solution having a composition containing high-silica fluorosilicic acid of 48.6 % by weight and free hydrogen fluoride of 5.7 % by weight.

Next, the distillation refinement of the crude aqueous high-silica fluorosilicic acid solution and the gas production due to sulfuric acid dehydration were performed using an apparatus of the steps (b) and (c) shown in Fig. 1. Sulfuric acid of 95 % by weight was fed to a gas scrubbing column 23, and a circulating operation was performed by using a pump. The crude aqueous high-silica fluorosilicic acid solution was supplied to a first distillation column 10 via a pump in the step (b) shown in Fig. 1, and a distillation was started. Waste, i.e., hydrofluorosilicic acid was discharged to a storage tank (not shown) which is separately prepared so that liquid level at a bottom of the first distillation column 10 is fixed.
Silicon tetrafluoride discharged from the top of a gas-liquid separation vessel 12 is sent via a gas generating column 19 to the gas scrubbing column 23. The refined aqueous high-silica fluorosilicic acid solution was supplied to the gas generating column 19 by the pump after distillate liquid, i.e., the refined aqueous high-silica fluorosilicic acid solution reaches to a specified liquid level of the gas-liquid separation vessel 12. The refined aqueous high-silica fluorosilicic acid solution was supplied to the gas generating column 19. At the same time, sulfuric acid of 95 % by weight was supplied to the gas scrubbing column 23 from an external supply source.
Furthermore, simultaneously, the supply of sulfuric acid of 95 % by weight from the gas scrubbing column 23 to the gas generating column 19 was started, and the generation of silicon tetrafluoride was started in the gas generating column 19. Silicon tetrafluoride yielded in the gas generating column 19 passed through the gas scrubbing column 23. Silicon tetrafluoride was then recovered by absorbing in diluted hydrofluoric acid in a scrubber in which diluted hydrofluoric acid was cooled and circulated.
Silicon tetrafluoride out of the gas scrubbing column 23 was partially sampled intermittently, and the concentration of air components contained therein was analyzed by gas chromatography. Waste sulfuric acid formed as a by-product in the gas generating column 19 was discharged to a receiver (not shown) separately prepared from the bottom of the gas generating column 19. Sulfuric acid of 95 % by weight used in this example was previously subjected to deaeration processing. The using temperature of sulfuric acid was set to 4.5 °C.

The distillation of the crude aqueous high-silica fluorosilicic acid solution and the generating operation of silicon tetrafluoride were performed for 4.5 hours. As a result, the total amount of the crude aqueous high-silica fluorosilicic acid solution supplied to the first distillation column 10 was 427.3.8 g, and the amount of hydrofluorosilicic acid recovered from the bottom of the first distillation column 10 was 2236.7 g.
Hydrofluorosilicic acid had a composition of 33.6 % by weight of hydrofluorosilicic acid and 9.4 % by weight of free hydrogen fluoride. In the gas-liquid separation vessel 12, 344.3 g of the refined aqueous high-silica fluorosilicic acid solution remained, and had a composition of 52.4 % by weight of the aqueous high-silica fluorosilicic acid solution and 2.2 % by weight of free hydrogen fluoride. As a result of calculating based on the flow rate and operating time of the pump used for sending the refined aqueous high-silica fluorosilicic acid solution and the specific gravity of the refined aqueous high-silica fluorosilicic acid solution, under the operation, the fluid volume of the aqueous high-silica fluorosilicic acid solution sent to the gas generating column 19 from the gas-liquid separation vessel 12 was 1149.2 g.
Also, 3004.1 g of hydrofluoric acid of 20.0 % by weight was fed to the recovery scrubber before starting the operation. Since the amount of liquid in the scrubber after the generation of gas was completed was 4024.9 g, and the liquid had a composition of 36.1 % by weight of hydrofluorosilicic acid and 5.0 % by weight of hydrogen fluoride, the total amount of the silicon tetrafluoride absorbed by the scrubber was 1020.8 g. The total amount of 95 % by weight of sulfuric acid supplied to the gas generating column 19 via the gas scrubbing column 23 was 3665.9 g. The amount of waste sulfuric acid discharged from the bottom of the gas generating column 19 was 4502.9 g, and the waste sulfuric acid had a composition of 77.3 % by weight of sulfuric acid and 3.5 % by weight of hydrogen fluoride.

It was confirmed that the refined aqueous high-silica fluorosilicic acid solution was refined by analyzing metal impurities in the crude aqueous high-silica fluorosilicic acid solution, the refined aqueous high-silica fluorosilicic acid solution and hydrofluorosilicic acid recovered by the scrubber, and that impurities were not contained in the yielded silicon tetrafluoride. The metal impurities were analyzed using ICP-AES (inductively-coupled plasma emission spectrometry) apparatus. Table 1 shows the results.

**Table 1**

| Impurity concentration [ppm] | Crude aqueous high-silica fluorosilicic acid solution | Refined aqueous high-silica fluorosilicic acid solution | Scrubber recovering liquid |
|---|---|---|---|
| Aluminum | 290 | <0.05 | <0.05 |
| Iron | 693 | <0.005 | <0.005 |
| Sodium | 104 | <0.05 | <0.05 |
| Potassium | 271 | <0.05 | <0.05 |
| Calcium | 24 | <0.005 | <0.005 |
| Magnesium | 0.34 | <0.01 | <0.01 |
| Manganese | 90 | <0.005 | <0.005 |
| Titanium | 52 | <0.01 | <0.01 |
| Arsenicum | 0.58 | <0.05 | <0.05 |
| Boron | 1.7 | <0.0.5 | <0.05 |
| Phosphorus | 16 | <0.05 | <0.05 |
| Sulfur | <0.05 | <0.05 | <0.05 |

Air components in the yielded silicon tetrafluoride were analyzed by gas chromatography. The concentration of the air components contained in silicon tetrafluoride was reduced with time from the start of the generation of gas. The concentration was approximately constant after 120 minutes from the operation start. The average value of the oxygen concentration was 382 ppm by volume, and the average value of nitrogen concentration was 710 ppm by volume. The other components were not detected.

Next, waste sulfuric acid and steam were supplied to the steam stripping column 28 in the step (d) shown in Fig. 1. Since a small amount of high pressure steam was not able to be metered in a small-scale experiment, pure water metered by the pump was indirectly boiled by a heat medium, and was supplied as steam. Since the steam temperature was low and the steam was supplied in a saturation state, the bottom of the steam stripping column 28 was heated from the outside by the heat medium in order to compensate the amount of heat.
In the steam stripping column 28, a Teflon Raschig ring having an outer diameter of 6 mm was provided so that the packing height was set to 2000 mm. The bottom operating temperature of the steam stripping column 28 was set to 155 °C. As a result, the concentration of sulfuric acid recovered from the bottom of the steam stripping column 28 was 65.6 % by weight, and the concentration of the hydrogen fluoride contained was 0.9 ppm. Hydrofluoric acid of 38.3 % by weight was recovered from the top of the steam stripping column 28.

Next, sulfuric acid of 65.6 % by weight obtained in the steam stripping column 28 was supplied to the evaporator 32 in the step (d) shown in Fig. 1, and was dehydrated and concentrated at 32 Torr and 189 °C. It was confirmed that sulfuric acid could be concentrated to the concentration of 95.3 % by weight.

Next, 58.8 g of a dry solid which contains fluorides and a fluorosilicates was reacted with 74.5 g of sulfuric acid of 98 % by weight in the reactor 40 in the step (e) shown in Fig. 1. Thereby, 14.5 g of hydrogen fluoride and 8.2 g of silicon tetrafluoride were recovered.

Silicon tetrafluoride was yielded in the same operation as the above description, and the yielded gas was recovered in a cylinder without absorbing the gas by the scrubber. Silicon tetrafluoride recovered in the cylinder was pressurized by a compressor, cooled and liquefied. Silicon tetrafluoride was distilled by being supplied to the second distillation column 51 shown in the step (g) of Fig. 1. The concentration of the air components in silicon tetrafluoride before and after the distillation was analyzed by gas chromatography. The concentration of oxygen in silicon tetrafluoride before the distillation was 40.5 ppm by volume, and the concentration of nitrogen was 752 ppm by volume. The oxygen concentration in silicon tetrafluoride after the distillation was 0.5 ppm by volume or less, and the concentration of nitrogen was 1 ppm by volume or less.

## Claims

1. A process for production of silicon tetrafluoride, the process comprising the following steps:
- a high-silica fluorosilicic acid production step in which a raw material containing silicon dioxide is reacted with a mixed solution containing hydrofluoric acid and hydrofluorosilicic acid to yield an aqueous high-silica fluorosilicic acid solution:
- a silicon tetrafluoride production step in which the aqueous high-silica fluorosilicic acid solution is reacted with sulfuric acid to yield silicon tetrafluoride; and
- a sulfuric acid production step in which sulfuric acid fraction containing hydrogen fluoride which is a by-product in the silicon tetrafluoride production step is subjected to steam stripping to yield sulfuric acid,
- wherein the sulfuric acid yielded in the sulfuric acid production step is reused in the silicon tetrafluoride production step.

2. The process for production of silicon tetrafluoride according to claim 1, wherein the sulfuric acid production step includes a step of dehydrating and concentrating the sulfuric acid yielded until the concentration of the sulfuric acid attains a specified concentration capable of being used in the silicon tetrafluoride production step.

3. The process for production of silicon tetrafluoride according to claim 2, wherein silica sand in which the content of silicon dioxide as the raw material is 80 % by weight or more is used.

4. The process for production of silicon tetrafluoride according to claim 3, wherein the content of the aqueous high-silica fluorosilicic acid solution yielded in the high-silica fluorosilicic acid production step, contained in a product is 42 % by weight or more.

5. The process for production of silicon tetrafluoride according to claim 4, wherein the concentration of the sulfuric acid used in the silicon tetrafluoride production step is 85 % by weight or more.

6. The process for production of silicon tetrafluoride according to claim 5, wherein the using temperature of the sulfuric acid used in the silicon tetrafluoride production step is 60 °C or less.

7. The process for production of silicon tetrafluoride according to claim 6, wherein the concentration of sulfuric acid containing hydrogen fluoride yielded in the silicon tetrafluoride production step is held at 80 % by weight or more in being calculated based on only sulfuric acid and water except for hydrogen fluoride.

8. The process for production of silicon tetrafluoride according to claim 7, wherein the content of hydrogen fluoride contained in sulfuric acid yielded in the sulfuric acid production step is 1 ppm by weight or less.

9. An apparatus for production of silicon tetrafluoride, the apparatus comprising:
- a reaction vessel in which a raw material containing silicon dioxide is reacted with a mixed solution containing hydrofluoric acid and hydrofluorosilicic acid to yield an aqueous high-silica fluorosilicic acid solution;
- a packed column in which the aqueous high-silica fluorosilicic acid solution is reacted with sulfuric acid to yield silicon tetrafluoride;
- a steam stripping column in which sulfuric acid containing hydrogen fluoride which is a by-product in the packed column is subjected to steam stripping to remove hydrogen fluoride to yield sulfuric acid; and
- an evaporator in which the sulfuric acid yielded in the steam stripping column is concentrated,
- wherein the sulfuric acid concentrated in the evaporator is supplied to the packed column.

10. The apparatus for production of silicon tetrafluoride according to claim 9, wherein the evaporator dehydrates and concentrates the sulfuric acid yielded in the steam stripping column until the concentration of the sulfuric acid attains a specified concentration capable of being used in the packed column.

11. The apparatus for production of silicon tetrafluoride according to claim 10, wherein the evaporator is made of metal or glass lining.
